# FASCICULE DE BREVET EUROPEEN

(11) **EP 3 239 550 B1**
(45) Date de publication et mention de la délivrance du brevet: **12.12.2018**
(21) Numéro de dépôt: 17166547.4
(22) Date de dépôt: 13.04.2017
(51) Int. Cl.: F16D 13/58, F16D 13/75

(54) **ENSEMBLE POUR UN DISPOSITIF D'EMBRAYAGE, NOTAMMENT POUR VEHICULE AUTOMOBILE**
ANORDNUNG FÜR EINE KUPPLUNGSVORRICHTUNG, INSBESONDERE FÜR KRAFTFAHRZEUG
ASSEMBLY FOR A CLUTCH DEVICE, IN PARTICULAR FOR A MOTOR VEHICLE

(30) Priorité: 27.04.2016 FR 1653761
(43) Date de publication de la demande: 01.11.2017
(73) Titulaire: Valeo Embrayages, 80009 Amiens Cedex 2 (FR)
(72) Inventeur: DELIENCOURT, Nicolas, 80009 AMIENS (FR); BRAILLY, Julien, 80009 AMIENS (FR); MARECHAL, Olivier, 80009 AMIENS (FR)
(74) Mandataire: Cardon, Nicolas

(56) Documents cités:
- DE-A1- 4 013 186
- DE-U1- 29 508 091
- FR-A1- 2 739 160
- FR-A1- 3 015 602

## Description

La présente invention concerne un ensemble pour un dispositif d'embrayage, notamment pour véhicule automobile.

Dans un véhicule automobile, un dispositif est destiné à coupler en rotation un arbre moteur, tel par exemple qu'un vilebrequin, et un arbre d'entrée d'une boîte de vitesses.

Le dispositif d'embrayage comprend habituellement un couvercle dans lequel est logé un diaphragme annulaire basculant entre une position embrayée et une position débrayée de manière à déplacer un plateau de pression. Le diaphragme pivote autour respectivement d'une première et d'une seconde zones d'appui s'étendant circonférentiellement et situées de part et d'autre du diaphragme, respectivement entre le diaphragme et le couvercle et entre le diaphragme et le plateau de pression. Le couvercle, le diaphragme et le plateau de pression sont solidaires en rotation.

Le diaphragme annulaire forme ainsi un levier articulé et comporte à sa périphérie radialement interne des doigts radiaux coopérant avec une butée d'embrayage dont le déplacement axial entraîne le basculement du diaphragme entre ses positions embrayée et débrayée. La périphérie externe du diaphragme permet quant à elle de déplacer le plateau de pression. La butée d'embrayage est actionnée par l'utilisateur à l'aide de la pédale d'embrayage.

Le plateau de pression, sollicité par le diaphragme, est destiné à serrer un disque de friction sur un plateau de réaction coaxial au plateau de pression et au disque de friction.

Le disque de friction est lié en rotation à l'arbre d'entrée de la boîte de vitesses et le plateau de réaction est solidaire en rotation du couvercle et d'un volant lié à l'arbre moteur. Ainsi, le serrage d'un disque de friction entre les plateaux de pression et de réaction permet la transmission d'un couple entre l'arbre moteur et l'arbre d'entrée de la boîte de vitesses.

L'utilisation de l'embrayage provoque une usure des garnitures de friction du disque de friction ainsi que des contre-matériaux des plateaux de pression et de réaction associés. Ceci se traduit par une variation de la position du plateau de pression par rapport au diaphragme et/ou au plateau de réaction associé, générant une variation de l'effort de serrage du disque de friction et/ou une modification du point de léchage et de la course de la butée d'embrayage. On rappelle que le point de léchage est la position à partir de laquelle une partie du couple du moteur est transmise à l'arbre de la boîte de vitesses lors de la fermeture de l'embrayage.

Le document DE 295 08 091 U1 décrit un embrayage avec une rondelle d'assistance. Dans cet embrayage, en position débrayée du diaphragme, la rondelle d'assistance vient axialement en appui sur une entretoise fixe par rapport au couvercle de façon à maintenir ladite rondelle d'assistance en appui contre le couvercle, ladite rondelle d'assistance n'étant pas en appui sur le diaphragme, en position embrayée du diaphragme, ladite rondelle d'assistance est en appui sur le diaphragme et n'est pas en appui sur ladite entretoise.

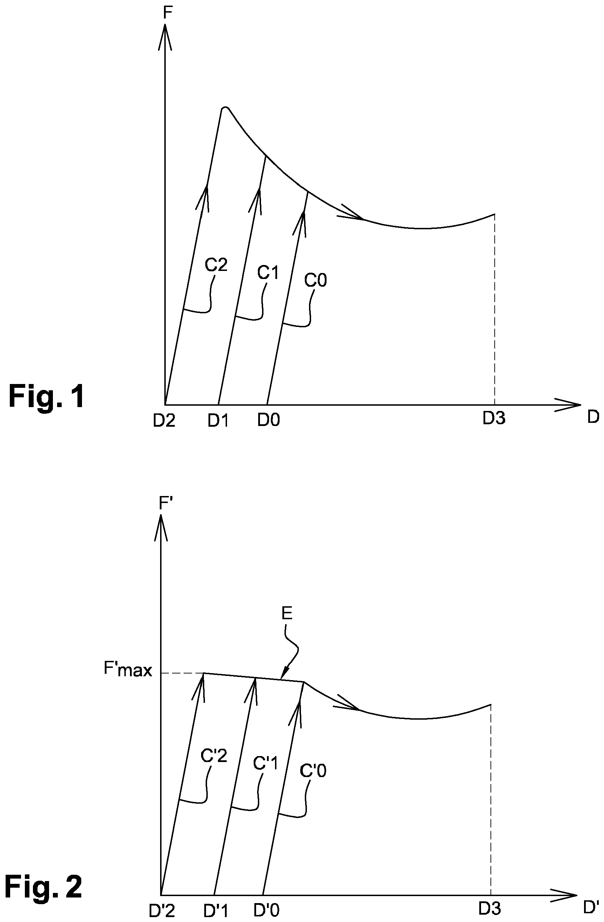

La figure 1 représente la variation de la charge F du diaphragme mesurée à la butée, c'est-à-dire la variation de l'effort axial devant être exercé par la butée d'embrayage pour actionner le diaphragme, le long de l'axe de ladite butée, en fonction du déplacement axial D de la butée, respectivement pour une usure nulle (courbe C0), pour une usure égale à 50% de l'usure maximale admissible (courbe C1), et pour l'usure maximale admissible (courbe C2).

Sur chacune desdites courbes, la position embrayée est représentée par une abscisse ou un déplacement D égal respectivement à D0, D1 et D2, la position débrayée étant représentée par une abscisse ou un déplacement D égal à D3.

On constate que, pour chacune des courbes, la charge du diaphragme mesurée à la butée augmente progressivement lors de la phase de débrayage, jusqu'à atteindre une charge maximale (pour un déplacement Dmax), avant de diminuer progressivement jusqu'à la position débrayée. On constate également que la charge maximale du diaphragme augmente avec l'usure.

Or, la charge du diaphragme mesurée à la butée est liée à l'effort exercé par l'utilisateur sur la pédale d'embrayage. En d'autres termes, l'effort qu'un utilisateur doit exercer sur la pédale pour débrayer sera d'autant plus important que l'usure est importante.

Afin d'assurer le confort de l'utilisateur, il est nécessaire de limiter à une certaine valeur l'effort à appliquer sur la pédale.

Afin de compenser l'usure, le document FR 2 847 626, au nom de la Demanderesse, propose des moyens de rattrapage d'usure interposés entre le plateau de pression et le diaphragme. Ces moyens de rattrapage d'usure comportent un anneau à rampes circonférentielles qui coopèrent avec des contre-rampes complémentaires du plateau de pression. L'anneau à rampes sert également à l'appui du diaphragme de sorte que la rotation de l'anneau par rapport au plateau de pression entraîne le déplacement des rampes par rapport aux contre-rampes et, ainsi, le déplacement axial du plateau de pression par rapport au diaphragme, au couvercle et au plateau de réaction. On fait ainsi varier la distance entre le plateau de pression et le plateau de réaction associé, d'une façon qui compense l'usure.

Un organe denté est en outre fixé sur l'anneau à rampes et engrène avec une vis sans fin montée dans un support, également appelé cassette, fixé au couvercle, l'organe denté étant au droit de la vis sans fin.

La vis sans fin est couplée en rotation avec une roue à rochet coopérant avec un cliquet fixé sur le couvercle et actionné par le diaphragme.

De cette manière, en cas d'usure et lors des actionnements successifs du diaphragme, le cliquet entraîne la rotation de la roue à rochet et de la vis sans fin, cette dernière entraînant la rotation de l'anneau portant les rampes, par l'intermédiaire de l'organe denté. On augmente ainsi progressivement la distance entre le plateau de pression et le couvercle et on diminue progressivement la distance entre le plateau de pression et le plateau de réaction associé, de façon à compenser l'usure.

De tels moyens de rattrapage d'usure sont relativement complexes et onéreux.

En vue de compenser l'influence de l'usure sur la charge du diaphragme à la butée, il est également connu de prévoir une rondelle d'assistance, montée axialement entre le couvercle et le diaphragme, la rondelle d'assistance exerçant un effort axial s'opposant, en partie, à celui exercé par le diaphragme, de façon à réduire l'effort maximal à exercer sur la butée d'embrayage.

La figure 2 est un diagramme similaire à celui de la figure 1, dans lequel la variation de la charge mesurée à la butée F' en fonction du déplacement axial D' de la butée tient compte de l'effort exercé par la rondelle d'assistance. Les courbes correspondantes sont référencées C'0 (usure nulle), C'1 (usure à 50%) et C'2 (usure maximale).

On constate que la rondelle d'assistance est définie de sorte que les courbes C'1 et C'2 comportent chacune une partie écrêtée E visant à réduire l'effort maximal F'max à fournir au niveau de la butée en cas d'usure.

La rondelle d'assistance permet ainsi de réduire l'effort devant être exercé par l'utilisateur sur la pédale d'embrayage, en particulier en cas d'usure du disque de friction.

L'utilisation d'une telle rondelle d'assistance est notamment connue du document CN201410688114.

On constate cependant que, en position débrayée du diaphragme, celui-ci se décolle de la rondelle d'assistance, de sorte que la rondelle d'assistance n'est plus coincée axialement entre le diaphragme et le couvercle mais peut se déplacer librement selon son axe. Un tel déplacement libre de la rondelle d'assistance peut générer des bruyances, de l'usure des appuis de la rondelle d'assistance, et provoquer un endommagement prématuré de l'ensemble.

L'invention vise à remédier à cet inconvénient, de manière simple, efficace et peu onéreuse. A cet effet, elle propose un ensemble pour un dispositif d'embrayage, tel que définit dans la revendication 1.

La rondelle d'assistance est ainsi maintenue en position axiale entre le diaphragme et le couvercle, en position embrayée, et entre l'entretoise et le couvercle, en position débrayée. La rondelle ne peut donc pas se déplacer librement selon son axe, évitant ainsi les phénomènes de bruyance et d'endommagement prématuré.

L'appui de la rondelle d'assistance sur les pièces environnantes, c'est-à-dire le couvercle, le diaphragme ou l'entretoise, peut être réalisé directement ou indirectement, c'est-à-dire par l'intermédiaire d'une ou plusieurs pièces distinctes.

L'ensemble peut comporter au moins trois entretoises réparties sur la circonférence du couvercle, la rondelle d'assistance étant maintenue axialement par lesdites entretoises.

La rondelle d'assistance peut être centrée par appui radial sur les entretoises.

La rondelle d'assistance peut venir en appui sur le diaphragme et/ou sur l'entretoise par l'intermédiaire d'un jonc annulaire.

L'utilisation d'un jonc annulaire permet de limiter les frottements entre les différences surfaces en contact.

Le jonc annulaire peut être centré par appui radial sur les entretoises.

Le jonc peut s'étendre intégralement dans un plan radial.

En variante, le jonc peut comporter une partie principale s'étendant dans un plan radial, destiné à venir en appui sur la rondelle d'assistance, et au moins une partie s'étendant axialement, destinée à venir en appui sur l'entretoise correspondante.

La partie du jonc s'étendant axialement peut traverser axialement une ouverture du diaphragme, l'appui entre ladite partie et l'entretoise étant situé axialement à l'opposé du couvercle et de la rondelle d'assistance, par rapport au diaphragme.

Le jonc est ainsi empêché de pivoter autour de son axe par appui sur les bords de l'ouverture correspondante du diaphragme.

Chaque entretoise peut comporter une zone d'appui axial, par exemple une surface s'étendant radialement, une zone d'appui radial, par exemple une surface s'étendant axialement, la rondelle d'assistance ou le jonc annulaire étant apte à venir en appui sur lesdites zones d'appui axial et radial de façon à assurer le centrage ainsi que le maintien axial de ladite rondelle d'assistance ou dudit jonc annulaire par rapport au couvercle.

Les zones d'appui peuvent être formées par des surfaces planes et/ou bombées, c'est-à-dire convexes, par exemple.

Chaque entretoise peut comporter une partie de fixation au couvercle, les zones d'appui axial et radial étant formées sur une plaque d'appui distincte de la partie de fixation au couvercle, ladite plaque d'appui étant intercalée axialement entre la partie de fixation et le couvercle.

La plaque d'appui peut être montée sur ladite partie de fixation ou solidaire de ladite partie de fixation.

L'appui circonférentiel de la rondelle d'assistance sur le diaphragme peut être réalisé sur un même diamètre d'application que l'appui de la rondelle d'assistance sur l'entretoise.

Ceci permet d'améliorer la compacité axiale de l'ensemble.

L'invention concerne également un procédé de montage d'un ensemble du type précité, caractérisé en ce qu'il comporte les étapes consistant à :
- mesurer une cote relative au diaphragme,
- mesurer une cote relative à la rondelle d'assistance,
- choisir un jonc dont la section permet de compenser les écarts entre les cotes mesurées du diaphragme et de la rondelle d'assistance et des cotes de référence,
- monter le jonc choisi entre le diaphragme et la rondelle d'assistance.

De cette manière, il est possible de compenser les tolérances géométriques du diaphragme et de la rondelle d'assistance, par le choix d'un jonc ayant une section appropriée. En effet, le diaphragme et la rondelle d'assistance ont classiquement des parties élastiques réalisées par des portions coniques, à la manière de rondelles Belleville. La fabrication d'un tel diaphragme et d'une telle rondelle d'assistance est complexe et nécessite généralement des tolérances géométriques de fabrication importantes, qu'il convient de prendre en compte.

L'ensemble selon l'invention peut également comporter l'une ou plusieurs des caractéristiques suivantes :
- la rondelle d'assistance est montée de façon axialement précontrainte entre l'entretoise ou le diaphragme, d'une part, et le couvercle, d'autre part,
- la rondelle d'assistance est en appui sur le diaphragme ou sur l'entretoise au niveau de la périphérie radialement externe de la rondelle d'assistance,
- la rondelle d'assistance est en appui sur le couvercle au niveau de la périphérie radialement interne de la rondelle d'assistance,
- la rondelle d'assistance a une forme générale conique,
- l'ensemble comporte des organes d'appui fixés sur le couvercle, chaque organe d'appui comportant une branche en appui sur le diaphragme et tendant à maintenir le diaphragme en appui sur le couvercle,
- chaque organe d'appui présente une forme générale de U et comporte deux branches reliées par une partie élastiquement déformable et montées axialement de part et d'autre d'un bord du diaphragme, par exemple un bord radialement interne du diaphragme,
- l'une des branches de l'organe d'appui en U est fixée au couvercle, par exemple par rivetage,
- l'une des branches du U est fixée au couvercle par l'intermédiaire d'un rivet, l'autre branche du U comporte une ouverture en regard de la tête du rivet, pouvant loger au moins en partie ladite tête du rivet,
- l'entretoise comporte une première extrémité fixée au couvercle et une seconde extrémité traversant une ouverture du diaphragme, par exemple une ouverture délimitée entre deux doigts du diaphragme, ladite seconde extrémité comportant un premier épaulement définissant une zone d'appui axial et une zone d'appui radial aptes à positionner axialement et/ou radialement le diaphragme par rapport au couvercle, ladite seconde extrémité comportant en outre un second épaulement définissant la zone d'appui axial et/ou la zone d'appui radial aptes à positionner axialement et/ou radialement la rondelle d'assistance par rapport au couvercle,
- la rondelle d'assistance est conçue de façon à ce que sa compression axiale maximale entre ses positions embrayée à l'état neuf et embrayée à l'état usé est comprise entre 0 et 5 mm,
- le plateau de pression est couplé en rotation au couvercle par l'intermédiaire de languette élastiques, axialement déformables et tendant à rapprocher le plateau de pression du couvercle,
- le couvercle comporte une partie radiale comprenant un bord périphérique radialement interne et un bord périphérique externe qui est prolongé par une partie annulaire s'étendant axialement,
- le diaphragme, la rondelle d'assistance, le plateau de pression et/ou le jonc annulaire sont logés, au moins en partie, dans le volume interne délimité par le couvercle,
- la partie radiale du couvercle comporte des zones d'appui du diaphragme,
- lesdites zones d'appui du couvercle sont formées par des zones en saillie ou des bossages régulièrement répartis sur la circonférence,
- lesdits bossages ou zones en saillie ont des formes en arc de cercle et sont écartés circonférentiellement les uns des autres,
- la rondelle d'assistance est annulaire et est dépourvue de patte ou de plot s'étendant axialement ou radialement, par exemple au niveau du bord périphérique interne et/ou externe,
- la rondelle d'assistance est annulaire et est pourvue de pattes sur sa périphérie radialement interne,
- la rondelle d'assistance est une pièce de révolution.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est un diagramme représentant la charge du diaphragme mesurée à la butée, en fonction du déplacement de la butée, pour différents niveaux d'usure des garnitures du disque de friction,
- la figure 2 est un diagramme similaire à celui de la figure 1, représentant la charge du diaphragme mesurée à la butée, en fonction du déplacement de la butée, tenant compte de l'effort exercé par la rondelle d'assistance,
- les figures 3 à 7 représentent un ensemble pour un dispositif d'embrayage, selon une première forme de réalisation de l'invention, en particulier,

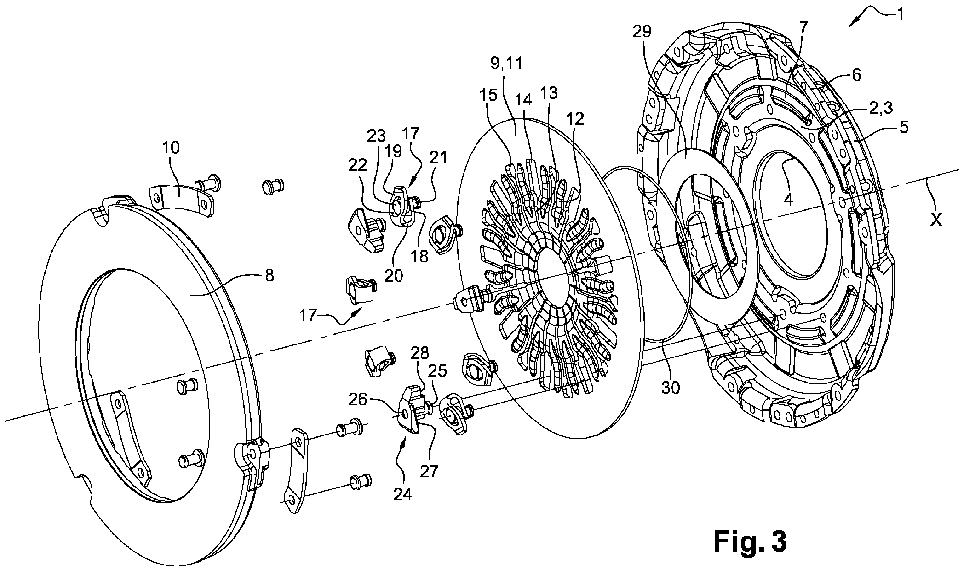

- la figure 3 est une vue éclatée, en perspective, de l'ensemble,

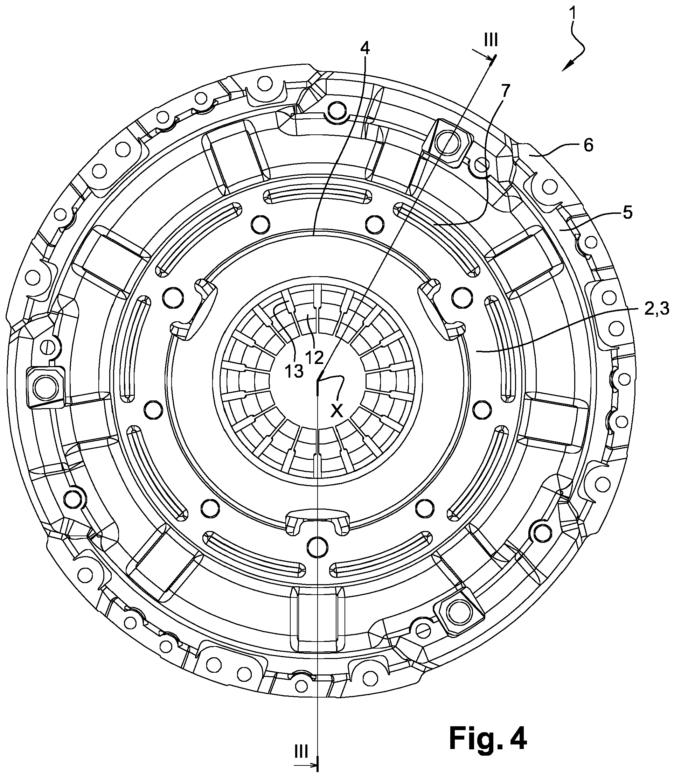

- la figure 4 est une vue de face de l'ensemble,

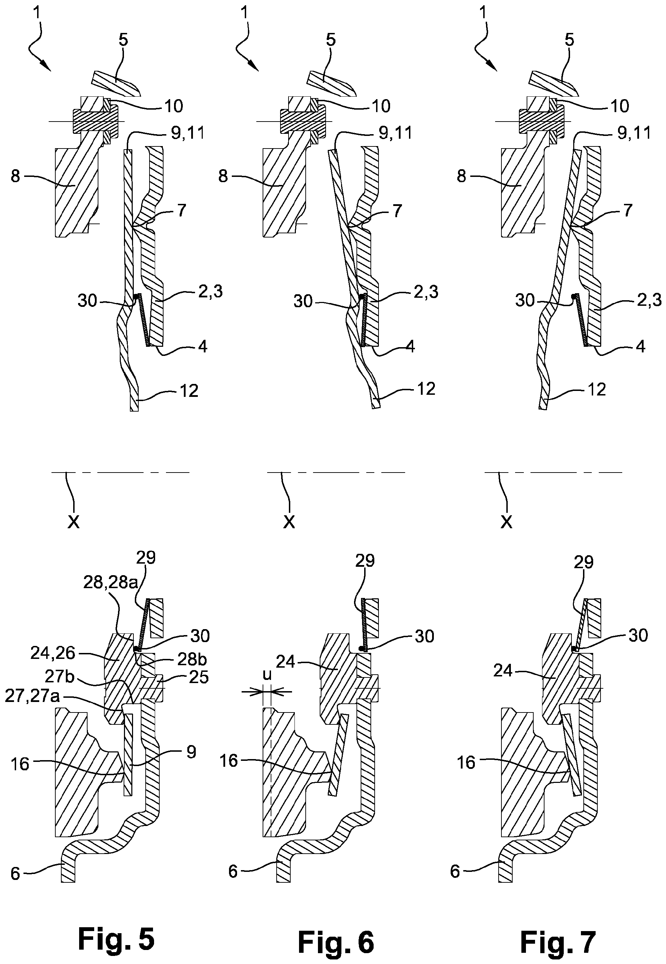

- la figure 5 est une section, selon un plan axial, de l'ensemble en position embrayée et en l'absence d'usure des garnitures du disque de friction,
- la figure 6 est une section, selon un plan axial, de l'ensemble en position embrayée et en cas d'usure,
- la figure 7 est une section, selon un plan axial, de l'ensemble en position débrayée,

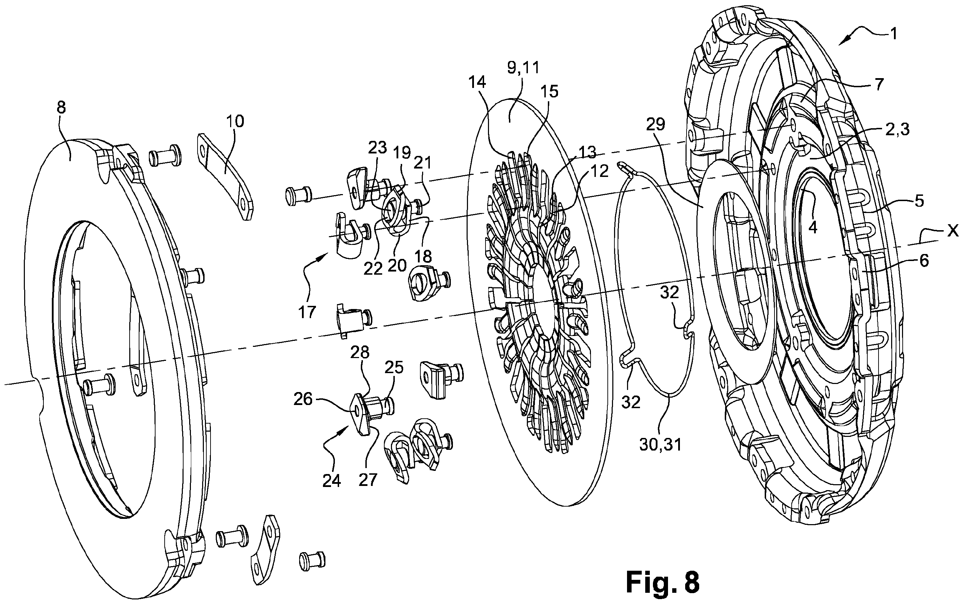

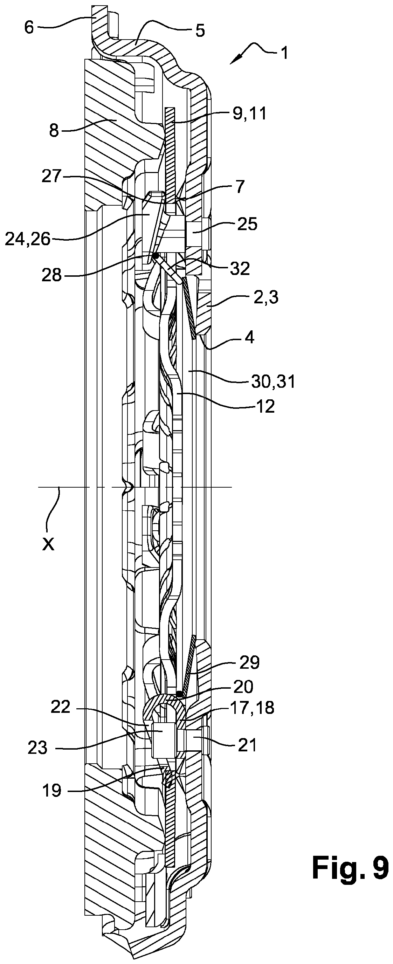

- les figures 8 et 9 représentent un ensemble pour un dispositif d'embrayage, selon une deuxième forme de réalisation de l'invention, en particulier,
- la figure 8 est une vue éclatée, en perspective, de l'ensemble,
- la figure 9 est une vue en coupe axiale de l'ensemble,

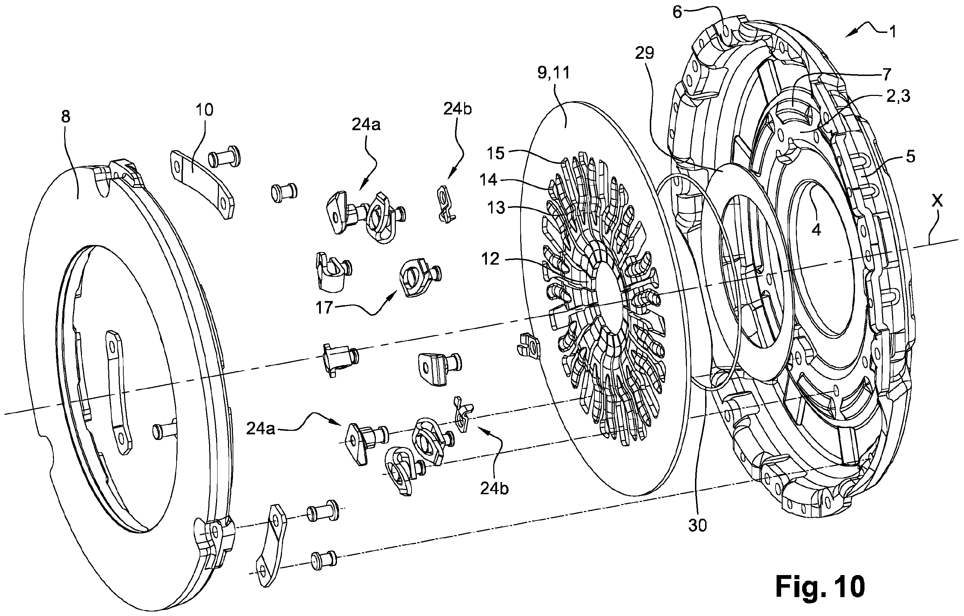

- les figures 10 à 14 représentent un ensemble pour un dispositif d'embrayage, selon une troisième forme de réalisation de l'invention, en particulier,
- la figure 10 est une vue éclatée, en perspective, de l'ensemble,

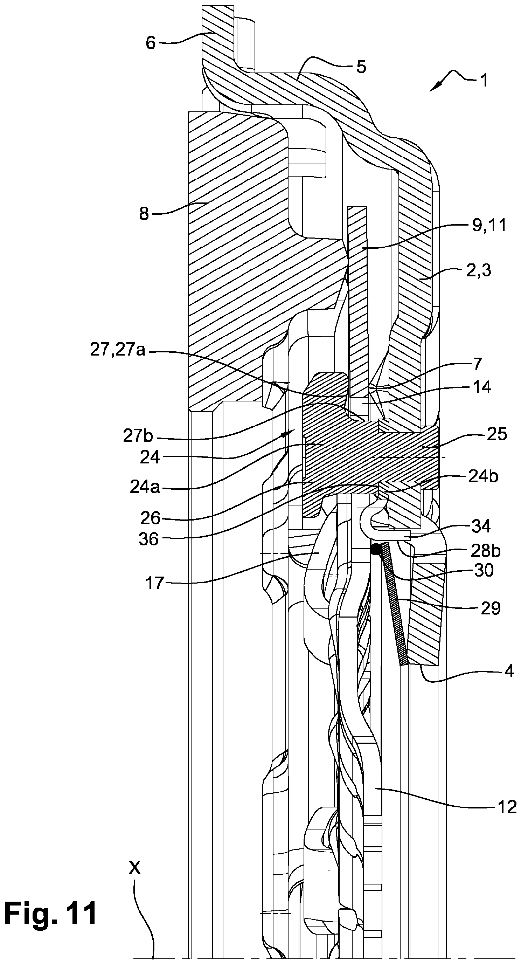

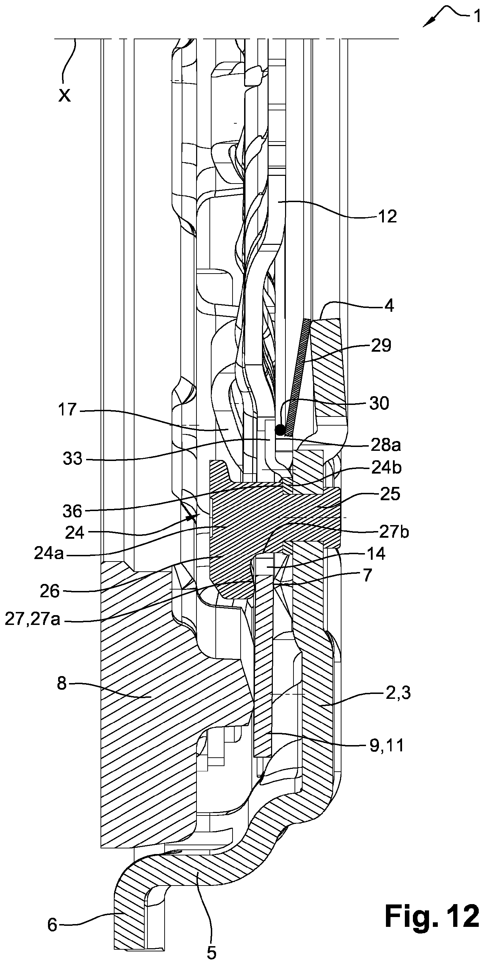

- les figures 11 et 12 sont des demi-coupes axiales de l'ensemble,

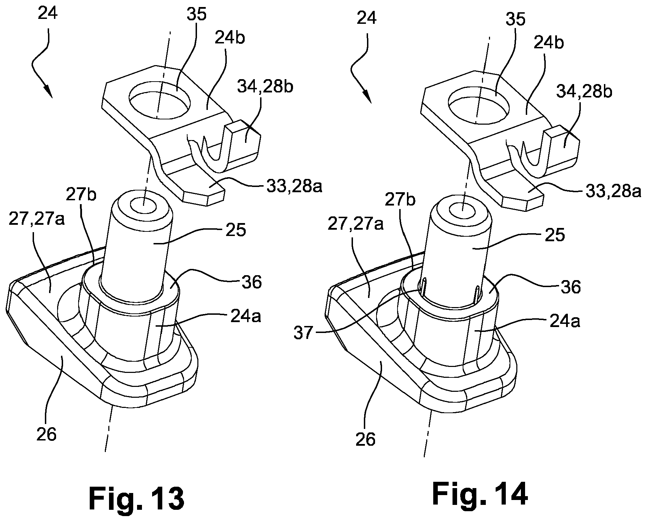

- la figure 13 est une vue éclatée, en perspective, d'une entretoise,
- la figure 14 est une vue correspondant à la figure 13, illustrant une variante de réalisation de l'entretoise.

Les figures 3 à 7 représentent un ensemble 1 pour un dispositif d'embrayage de type normalement fermé, selon une première forme de réalisation. Cet ensemble 1 comporte un couvercle 2 présentant annulaire, d'axe X.

Les termes « axial », « radial » et « circonférentiel » sont définis par référence à l'axe X.

Le couvercle 2 comporte une partie radiale 3 comportant un bord périphérique radialement interne 4 et dont le bord périphérique externe est prolongé par une partie annulaire 5 s'étendant axialement. Le couvercle 2 présente ainsi une forme générale de cloche délimitant un volume interne. L'extrémité libre de la partie annulaire axiale 5 comporte des brides 6 s'étendant radialement vers l'extérieur, servant notamment au montage du couvercle 2 sur un plateau de réaction formé par exemple par un volant moteur, non représenté.

La partie radiale 3 du couvercle 2 comporte des zones d'appui en saillie 7, en forme d'arc de cercle en vue de face, uniformément réparties sur toute la circonférence et décalées angulairement les unes des autres.

L'ensemble comporte en outre un plateau de pression 8 mobile axialement par rapport au couvercle 2 et actionné par un diaphragme 9 intercalé axialement entre le couvercle 2 et le plateau de pression 8.

Le plateau de pression 8 est couplé en rotation au couvercle 2 par l'intermédiaire de languettes 10 s'étendant circonférentiellement et déformable dans la direction radiale, de manière à rappeler le couvercle 2 en direction de la partie radiale 3 du couvercle 2.

Le plateau de pression 8 est mobile entre une position embrayée, dans laquelle il est déplacé par le diaphragme 9 à l'opposé de la partie radiale 3 du couvercle 2, de façon à serrer un disque de friction (non représenté) contre le plateau de réaction, et une position débrayée dans laquelle il est rappelé en direction de la partie radiale du couvercle 2 par les languettes 10.

Le diaphragme 9 comporte une partie annulaire 11 d'axe X, radialement externe et déformable élastiquement selon l'axe X, ladite partie annulaire 11 étant de forme générale conique à la manière d'une rondelle Belleville. Le diaphragme 9 comporte en outre des doigts 12 s'étendant radialement vers l'intérieur depuis la partie annulaire 11, les extrémités libres des doigts 12 servant à l'appui d'une butée d'embrayage non représentée. Les doigts 12 délimitent entre eux des fentes radiales 13, les extrémités radialement externe des fentes 13 présentant des ouvertures 14, 15 plus larges que le reste des fentes 13, par exemple des ouvertures 14, 15 de forme globalement carrée ou rectangulaire.

Les ouvertures 14, 15 peuvent avoir des géométries différentes. Dans la forme de réalisation représentée ici, les ouvertures 14 sont plus grandes que les ouvertures 15.

La partie annulaire 11 du diaphragme 9 est en appui sur les zones d'appui 7 du couvercle 2, de sorte que le diaphragme 9 peut basculer autour desdites zones d'appui 7 lors de son actionnement entre ses positions embrayée (figures 5 et 6) et débrayée (figure 7). La partie annulaire 11 du diaphragme 9 est également en appui sur le plateau mobile 8, dans une zone 16 située radialement à l'extérieur des zones d'appui 7 du couvercle 2, de manière à former un bras de levier.

L'ensemble 1 comporte de plus des organes d'appui 17 en forme générale de U, comportant une première branche 18 et une seconde branche 19 reliées par une zone courbe 20 élastiquement déformable. Les branches 18, 19 sont montées axialement de part et d'autre du bord interne diaphragme. La branche 18 de chaque organe d'appui est fixée au couvercle par l'intermédiaire d'un rivet 21, la branche 19 comportant une ouverture 22 logeant, au moins en partie, la tête correspondante 23 du rivet 21. La branche 19 tend à plaquer le diaphragme 9 en appui sur les zones d'appui 7 du couvercle 2.

Les organes d'appui 17 traversent les ouvertures 15 du diaphragme 9 et permettent de maintenir axialement et radialement le diaphragme 9 en position.

L'ensemble 1 comporte en outre des entretoises 24, par exemple trois entretoises 24 uniformément réparties sur la circonférence. Chaque entretoise 24 traverse une ouverture du diaphragme 15. Chaque entretoise 24 comporte une première extrémité 25 fixée par rivetage par exemple au couvercle 2, et une extrémité 26 comportant un épaulement radialement externe 27 et un épaulement radialement interne 28.

Comme cela est mieux visible à la figure 5, l'épaulement radialement interne 28 définit une surface plane s'étendant radialement 28a et formant une zone d'appui axial apte à maintenir axialement une rondelle d'assistance 29 en appui sur le couvercle 2. L'épaulement interne 28 définit également une surface plane 28b s'étendant axialement et formant une zone d'appui radial apte à positionnement radialement la rondelle d'assistance 29 par rapport au couvercle 2, c'est-à-dire à apte à centrer ladite rondelle d'assistance 29 par rapport au couvercle 2.

L'épaulement radialement externe 27 définit une surface plane 27a s'étendant radialement et formant une zone d'appui axial apte à positionner axialement le diaphragme 9 par rapport au couvercle 2. Le centrage du diaphragme 9 est réalisé au niveau des côtés latéraux des entretoises 24, au travers des ouvertures 14.

La rondelle d'assistance 29 est élastiquement déformable dans la direction axiale, ladite rondelle d'assistance 29 présentant une forme générale conique à la manière d'une rondelle Belleville.

La périphérie radialement interne de la rondelle d'assistance 29 est en appui direct sur la partie radiale 3 du couvercle 2, en particulier au niveau du bord radialement interne 4 du couvercle 2. La périphérie radialement externe de la rondelle d'assistance 29 est en appui sur le diaphragme 9 ou sur les entretoises 24, par l'intermédiaire d'un jonc annulaire 30 s'étendant dans le plan radial. La rondelle d'assistance 29 est montée précontrainte entre le couvercle 2, d'une part, et le diaphragme 9 et/ou les entretoises 24, d'autre part.

On notera qu'il peut exister une phase transitoire où le jonc 30 est en appui simultanément sur le diaphragme 9 et les entretoises 24 lors de la phase de débrayage ou d'embrayage. Cette phase est furtive et ne dure que quelques millisecondes. De manière générale, la rondelle d'assistance 29 et le jonc 30 prennent appui, d'une part sur le couvercle 2, et d'autre part soit uniquement sur les entretoises 24, soit uniquement sur le diaphragme 9.

La rondelle d'assistance 29, le jonc 30, le diaphragme 9 et le plateau de pression 8 sont logés, au moins en partie, dans le volume interne du couvercle 2.

En fonctionnement, lors d'une phase de débrayage, l'utilisateur appuie sur la pédale d'embrayage, de façon à déplacer la butée d'embrayage et faire basculer ainsi le diaphragme 9 autour des zones 7, 27 du couvercle et des entretoises 24, de sa position embrayée représentée à la figure 5 (en l'absence d'usure) ou à la figure 6 (en cas d'usure), à sa position débrayée représentée à la figure 7. Le diaphragme 9 repousse le plateau de pression 8 à l'encontre de l'effort axial exercé par les languettes élastiques 10, de façon à pincer le disque de friction entre le plateau de pression 8 et le plateau de réaction. Lors de son basculement, le diaphragme 6 est maintenu en appui sur le couvercle 2 par les organes d'appui 17 et est maintenu en appui sur les épaulements radialement externes 27 des entretoises 24. Par ailleurs, la rondelle d'assistance 29 est maintenue en appui sur le couvercle 2, par le diaphragme 9 ou par les entretoises 24, quelle que soit la position embrayée ou débrayée du diaphragme 9. On notera toutefois que la rondelle d'assistance 29 est en appui sur les entretoises 24, par l'intermédiaire du jonc 30, et n'est pas en appui sur le diaphragme 9 en position débrayée. Par ailleurs, la rondelle d'assistance 29 est en appui sur le diaphragme 9, par l'intermédiaire du jonc 30, et n'est pas en appui sur les entretoises 24 en position embrayée.

On constate que l'écrasement axial de la rondelle d'assistance 29 en position embrayée est d'autant plus important que l'usure u des garnitures du disque de friction est importante, comme cela est visible sur les figures 5 et 6, la figure 5 représentant la position embrayée avec un ensemble non usé, la figure 6 représentant la position embrayée avec un ensemble usé.

La rondelle d'assistance 29 est conçue de façon à autoriser une compression axiale maximale comprise entre 0 et 5 mm, par exemple.

Comme précédemment, la rondelle d'assistance 29 est conçue de façon à ce que l'effort axial devant être appliqué au niveau de la butée d'embrayage (ou de la périphérie radialement interne des doigts 12 du diaphragme 9) pour comprimer la rondelle d'assistance 29, appelé charge à la butée de la rondelle d'assistance 29, varie en fonction du déplacement de ladite butée d'embrayage.

Par ailleurs, comme précédemment, le diaphragme 9 et la rondelle d'assistance 29 sont conçus de façon à ce que la charge totale à la butée, c'est-à-dire l'effort à fournir au niveau de la butée d'embrayage pour débrayer, comporte une partie écrêtée E visant à réduire l'effort maximal à fournir au niveau de la butée en cas d'usure des garnitures du disque de friction, comme cela est illustré sur la figure 2.

L'ensemble 1 selon l'invention permet ainsi de maintenir axialement et radialement la rondelle d'assistance 29 et le jonc 30, quelle que soit la position du diaphragme 9, de façon à éviter tout phénomène de bruyance ou toute usure prématurée.

Les dimensions de la section (ici le diamètre de la section circulaire) du jonc annulaire 30 peuvent être ajustées pour compenser les tolérances géométriques du diaphragme 9 et de la rondelle d'assistance 29.

Les figures 8 et 9 représentent un ensemble 1 pour un dispositif d'embrayage, selon une deuxième forme de réalisation. Cet ensemble 1 diffère de celui exposé en référence aux figures 3 à 7 en ce que le jonc 30 ne s'étend pas uniquement dans un plan radial. Au contraire, le jonc annulaire 30 comporte une partie annulaire 31 à partir de laquelle s'étendent trois zones d'appui 32 s'étendant radialement vers l'extérieur et axialement en direction du plateau de pression 8. Chaque zone d'appui 32 est réalisée par une forme en U du fil formant le jonc 30, chaque zone d'appui 32 formant un angle compris entre 30 et 60°, par exemple de l'ordre de 45° avec le plan radial. Les zones d'appui 32 sont engagées dans certaine des ouvertures 14 du diaphragme 9, dont les dimensions circonférentielles correspondent sensiblement à celles des zones d'appui 32 du jonc 30. Le jonc 30 est ainsi couplé en rotation par rapport au diaphragme 9, le jonc 30 pouvant se déplacer axialement par rapport audit diaphragme 9. Les usures du jonc 30 sont ainsi réduites.

La partie annulaire 31 du jonc 30 est maintenue en appui sur la périphérie radialement externe de la rondelle d'assistance 29, comme précédemment.

Les extrémités libres des zones d'appui 32 sont en appui sur les faces délimitées par les épaulements radialement internes 28 des entretoises 24, lesdits épaulements interne 28 étant cependant situés axialement de l'autre côté du diaphragme 9 par comparaison avec la première forme de réalisation illustrée aux figures 3 à 7.

Le fonctionnement de l'ensemble 1 selon cette deuxième forme de réalisation reste inchangé.

Les figures 10 à 14 représentent un ensemble 1 pour un dispositif d'embrayage, selon une troisième forme de réalisation. Cet ensemble 1 diffère de celui exposé en référence aux figures 3 à 7 en ce que les entretoises 24 sont formés de deux parties 24a, 24b distinctes l'une de l'autre et solidaires l'une de l'autre, au moins après montage des entretoises 24 sur le couvercle 2.

Chaque entretoise 24 comporte ainsi une première partie 24a comportant une extrémité 25 fixée au couvercle par rivetage et une extrémité 26 comportant l'épaulement radialement externe 27 servant à l'appui du diaphragme 9. Chaque entretoise 24 comporte en outre une seconde partie formée par une plaque d'appui 24b, réalisée par exemple par découpage et pliage d'une tôle, ladite plaque d'appui 24b comportant un premier prolongement 33 s'étendant radialement et un second prolongement 34 replié axialement, lesdits prolongements 33, 34 formant ainsi les surfaces radiale 28a et axiale 28b servant à l'appui et au maintien en position axial et radial du jonc annulaire 30 et de la rondelle d'assistance 29. Les prolongements 33, 34 forment ainsi ou remplacent l'épaulement radialement interne 28 de l'entretoise correspondante 24.

La deuxième partie 24a peut comporter un trou 35 traversé par la première extrémité cylindrique 25 de la première partie 24a, comme cela est mieux visible à la figure 13. La deuxième partie 24b peut être montée librement sur la première partie 24a avant sertissage de la première partie 24a sur le couvercle 2. Après sertissage, les deux parties 24a, 24b sont alors solidaires l'une de l'autre. La deuxième partie 24b peut également venir en appui sur un épaulement 36 de la première partie 24a, de façon à positionner axialement la seconde partie 24b par rapport à la première partie 24a.

En variante, comme cela est représenté à la figure 14, la première partie 24a peut comporter des zones en saillie ou des crantages 37, de manière à pouvoir emmancher en force la seconde partie 24b sur la première partie 24a afin que ces parties 24a, 24b soient solidaires l'une de l'autre avant fixation de l'entretoise 24 sur le couvercle 2.

Le fonctionnement de l'ensemble 1 selon cette troisième forme de réalisation reste inchangé.

On notera qu'il est possible de combiner les caractéristiques des modes de réalisation exposés précédemment.

## Revendications

1. Ensemble (1) pour un dispositif d'embrayage, notamment pour véhicule automobile, comportant un couvercle (2) présentant un axe (X), un plateau de pression (8) mobile par rapport au couvercle (2) selon ledit axe (X) et actionné par un diaphragme (9) intercalé axialement entre le couvercle (2) et le plateau de pression (8), le diaphragme (9) étant mobile entre position embrayée et une position débrayée, une rondelle d'assistance (29) élastiquement déformable, intercalée axialement entre le couvercle (2) et le diaphragme (9) et apte à exercer un effort axial variable en fonction de la position du diaphragme (9), en position débrayée du diaphragme (9), la rondelle d'assistance (29) étant apte à venir axialement en appui sur une entretoise (24) fixe par rapport au couvercle (2) de façon à maintenir ladite rondelle d'assistance (29) en appui contre le couvercle (2), ladite rondelle d'assistance (29) n'étant pas en appui sur le diaphragme (9), en position embrayée du diaphragme (9), ladite rondelle d'assistance (29) étant en appui sur le diaphragme (9) au niveau de la périphérie radialement externe de ladite rondelle d'assistance et n'est pas en appui sur ladite entretoise (24).

2. Ensemble (1) selon la revendication 1, **caractérisé en ce qu'**il comporte au moins trois entretoises (24) réparties sur la circonférence du couvercle (2), la rondelle d'assistance (29) étant maintenue axialement par lesdites entretoises (24).

3. Ensemble (1) selon la revendication 2, **caractérisé en ce que** la rondelle d'assistance (29) est centrée par appui radial sur les entretoises (24).

4. Ensemble (1) selon l'une des revendications 1 à 3, **caractérisé en ce que** la rondelle d'assistance (29) vient en appui sur le diaphragme (9) et/ou sur l'entretoise (24) par l'intermédiaire d'un jonc annulaire (30).

5. Ensemble (1) selon la revendication 4, **caractérisé en ce que** le jonc annulaire (30) est centré par appui radial sur les entretoises (24).

6. Ensemble (1) selon la revendication 4 ou 5, **caractérisé en ce que** le jonc annulaire (30) s'étend intégralement dans un plan radial.

7. Ensemble (1) selon la revendication 4 ou 5, **caractérisé en ce que** le jonc (30) comporte une partie principale (31) s'étendant dans un plan radial, destiné à venir en appui sur la rondelle d'assistance (29), et au moins une partie (32) s'étendant axialement, destinée à venir en appui sur l'entretoise correspondante (24).

8. Ensemble (1) selon la revendication 7, **caractérisé en ce que** la partie (32) du jonc (30) s'étendant axialement traverse axialement une ouverture (14) du diaphragme (9), l'appui entre ladite partie (32) et l'entretoise (24) étant situé axialement à l'opposé du couvercle (2) et de la rondelle d'assistance (29), par rapport au diaphragme (9).

9. Ensemble (1) selon l'une des revendications 3 à 8, **caractérisé en ce que** chaque entretoise (24) comporte une zone d'appui axial, par exemple une surface (28a) s'étendant radialement, une zone d'appui radial, par exemple une surface (28b) s'étendant axialement, la rondelle d'assistance (29) ou le jonc annulaire (30) étant apte à venir en appui sur lesdites zones d'appui axial et radial (28a, 28b) de façon à assurer le centrage ainsi que le maintien axial de ladite rondelle d'assistance (29) ou dudit jonc annulaire (30) par rapport au couvercle (2).

10. Ensemble (1) selon la revendication 9, **caractérisé en ce que** chaque entretoise (24) comporte une partie (24a) de fixation au couvercle (2), les zones d'appui axial et radial (28a, 28b) étant formées sur une plaque d'appui (24b) distincte de la partie (24a) de fixation au couvercle (2), ladite plaque d'appui (24b) étant intercalée axialement entre la partie de fixation (24a) et le couvercle (4).

11. Ensemble (1) selon la revendication 10, **caractérisé en ce que** la plaque d'appui (24b) est montée sur ladite partie de fixation (24a) ou solidaire de ladite partie de fixation (24a).

12. Ensemble (1) selon l'une des revendications 1 à 11, **caractérisé en ce que** l'appui circonférentiel de la rondelle d'assistance (29) sur le diaphragme (9) est réalisé sur un même diamètre d'application que l'appui de la rondelle d'assistance (29) sur l'entretoise (24).

13. Procédé de montage d'un ensemble (1) selon l'une des revendications 4 à 12, **caractérisé en ce qu'**il comporte les étapes consistant à :
- mesurer une cote relative au diaphragme (9),
- mesurer une cote relative à la rondelle d'assistance (29),
- choisir un jonc (30) dont la section permet de compenser les écarts entre les cotes mesurées du diaphragme (9) et de la rondelle d'assistance (29) et des cotes de référence,
- monter le jonc (30) choisi entre le diaphragme (9) et la rondelle d'assistance (29).

## Patentansprüche

1. Anordnung (1) für eine Kupplungsvorrichtung, insbesondere für ein Kraftfahrzeug, welche umfasst: eine Abdeckung (2), die eine Achse (X) aufweist, eine Anpressplatte (8), die bezüglich der Abdeckung (2) entlang der Achse (X) beweglich ist und von einer Membran (9) betätigt wird, die axial zwischen der Abdeckung (2) und der Anpressplatte (8) angeordnet ist, wobei die Membran (9) zwischen einer eingekuppelten Position und einer ausgekuppelten Position beweglich ist, eine elastisch verformbare Unterstützungsscheibe (29), die axial zwischen der Abdeckung (2) und der Membran (9) angeordnet ist und in der Lage ist, eine in Abhängigkeit von der Position der Membran (9) variable axiale Kraft auszuüben, wobei in der ausgekuppelten Position der Membran (9) die Unterstützungsscheibe (29) axial an einem bezüglich der Abdeckung (2) festen Distanzstück (24) zur Anlage kommen kann, so dass die Unterstützungsscheibe (29) an der Abdeckung (2) abgestützt gehalten wird, wobei die Unterstützungsscheibe (29) nicht an der Membran (9) anliegt, wobei in der eingekuppelten Position der Membran (9) die Unterstützungsscheibe (29) am radial äußeren Umfang der Unterstützungsscheibe an der Membran (9) anliegt und nicht an dem Distanzstück (24) anliegt.

2. Anordnung (1) nach Anspruch 1, **dadurch gekennzeichnet, dass** sie wenigstens drei Distanzstücke (24) aufweist, die auf dem Umfang der Abdeckung (2) verteilt sind, wobei die Unterstützungsscheibe (29) axial von diesen Distanzstücken (24) gehalten wird.

3. Anordnung (1) nach Anspruch 2, **dadurch gekennzeichnet, dass** die Unterstützungsscheibe (29) durch radiale Abstützung an den Distanzstücken (24) zentriert ist.

4. Anordnung (1) nach einem der Ansprüche 1 bis 3, **dadurch gekennzeichnet, dass** die Unterstützungsscheibe (29) über einen Sprengring (30) an der Membran (9) und/oder an dem Distanzstück (24) zur Anlage kommt.

5. Anordnung (1) nach Anspruch 4, **dadurch gekennzeichnet, dass** der Sprengring (30) durch radiale Abstützung an den Distanzstücken (24) zentriert ist.

6. Anordnung (1) nach Anspruch 4 oder 5, **dadurch gekennzeichnet, dass** sich der Sprengring (30) vollständig in einer radialen Ebene erstreckt.

7. Anordnung (1) nach Anspruch 4 oder 5, **dadurch gekennzeichnet, dass** der Sprengring (30) einen sich in einer radialen Ebene erstreckenden Hauptteil (31) aufweist, der dazu bestimmt ist, an der Unterstützungsscheibe (29) zur Anlage zu kommen, und wenigstens einen sich axial erstreckenden Teil (32), der dazu bestimmt ist, an dem entsprechenden Distanzstück (24) zur Anlage zu kommen.

8. Anordnung (1) nach Anspruch 7, **dadurch gekennzeichnet, dass** der sich axial erstreckende Teil (32) des Sprengrings (30) eine Öffnung (14) der Membran (9) axial durchquert, wobei die Anlage zwischen dem Teil (32) und dem Distanzstück (24), bezogen auf die Membran (9), axial gegenüber der Abdeckung (2) und der Unterstützungsscheibe (29) erfolgt.

9. Anordnung (1) nach einem der Ansprüche 3 bis 8, **dadurch gekennzeichnet, dass** jedes Distanzstück (24) einen Bereich der axialen Anlage, zum Beispiel eine sich radial erstreckende Fläche (28a), und einen Bereich der radialen Anlage, zum Beispiel eine sich axial erstreckende Fläche (28b), aufweist, wobei die Unterstützungsscheibe (29) oder der Sprengring (30) an den Bereichen der axialen und radialen Anlage (28a, 28b) zur Anlage kommen kann, um die Zentrierung sowie den axialen Halt der Unterstützungsscheibe (29) oder des Sprengrings (30) in Bezug auf die Abdeckung (2) sicherzustellen.

10. Anordnung (1) nach Anspruch 9, **dadurch gekennzeichnet, dass** jedes Distanzstück (24) einen Teil (24a) zur Befestigung an der Abdeckung (2) aufweist, wobei die Bereiche der axialen und radialen Anlage (28a, 28b) auf einer Anlageplatte (24b) ausgebildet sind, die von dem Teil (24a) zur Befestigung an der Abdeckung (2) verschieden ist, wobei diese Anlageplatte (24b) axial zwischen dem Befestigungsteil (24a) und der Abdeckung (4) angeordnet ist.

11. Anordnung (1) nach Anspruch 10, **dadurch gekennzeichnet, dass** die Anlageplatte (24b) an dem Befestigungsteil (24a) angebracht ist oder mit dem Befestigungsteil (24a) einstückig ausgebildet ist.

12. Anordnung (1) nach einem der Ansprüche 1 bis 11, **dadurch gekennzeichnet, dass** die am Umfang erfolgende Anlage der Unterstützungsscheibe (29) an der Membran (9) auf demselben Anlagedurchmesser erfolgt wie die Anlage der Unterstützungsscheibe (29) am Distanzstück (24).

13. Verfahren zur Montage einer Anordnung (1) nach einem der Ansprüche 4 bis 12, **dadurch gekennzeichnet, dass** es die folgenden Schritte umfasst:
- Messen eines Maßes, das sich auf die Membran (9) bezieht,
- Messen eines Maßes, das sich auf die Unterstützungsscheibe (29) bezieht,
- Wählen eines Sprengrings (30), dessen Querschnitt es ermöglicht, die Abweichungen zwischen den gemessenen Maßen der Membran (9) und der Unterstützungsscheibe (29) und Referenzmaßen zu kompensieren,
- Anbringen des gewählten Sprengrings (30) zwischen der Membran (9) und der Unterstützungsscheibe (29).

## Claims

1. Assembly (1) for a clutch device, in particular for a motor vehicle, comprising a cover (2) having an axis (X), a pressure plate (8) that is mobile relative to the cover (2) along said axis (X) and actuated by a diaphragm (9) interposed axially between the cover (2) and the pressure plate (8), the diaphragm (9) being mobile between a clutched position and a declutched position, an elastically-deformable assistance washer (29), interposed axially between the cover (2) and the diaphragm (9) and capable of exerting an axial force that is variable as a function of the position of the diaphragm (9), in declutched position of the diaphragm (9), the assistance washer (29) being capable of coming to bear axially on a spacer (24) that is fixed relative to the cover (2) so as to keep said assistance washer (29) bearing against the cover (2), said assistance washer (29) not bearing on the diaphragm (9), in clutched position of the diaphragm (9), said assistance washer (29) bearing on the diaphragm (9) at the radially outer periphery of said assistance washer and not bearing on said spacer (24).

2. Assembly (1) according to Claim 1, **characterized in that** it comprises at least three spacers (24) distributed over the circumference of the cover (2), the assistance washer (29) being held axially by said spacers (24).

3. Assembly (1) according to Claim 2, **characterized in that** the assistance washer (29) is centred by radial bearing on the spacers (24).

4. Assembly (1) according to one of Claims 1 to 3, **characterized in that** the assistance washer (29) comes to bear on the diaphragm (9) and/or on the spacer (24) via an annular ring (30).

5. Assembly (1) according to Claim 4, **characterized in that** the annular ring (30) is centred by radial bearing on the spacers (24).

6. Assembly (1) according to Claim 4 or 5, **characterized in that** the annular ring (30) extends entirely in a radial plane.

7. Assembly (1) according to Claim 4 or 5, **characterized in that** the ring (30) comprises a main part (31) extending in a radial plane, intended to come to bear on the assistance washer (29), and at least one part (32) extending axially, intended to come to bear on the corresponding spacer (24).

8. Assembly (1) according to Claim 7, **characterized in that** the part (32) of the ring (30) extending axially passes axially through an opening (14) of the diaphragm (9), the bearing between said part (32) and the spacer (24) being situated axially opposite the cover (2) and the assistance washer (29), relative to the diaphragm (9).

9. Assembly (1) according to one of Claims 3 to 8, **characterized in that** each spacer (24) comprises an axial bearing zone, for example a surface (28a) extending radially, a radial bearing zone, for example a surface (28b) extending axially, the assistance washer (29) or the annular ring (30) being able to come to bear on said axial and radial bearing zones (28a, 28b) so as to ensure the centring and the axial holding of said assistance washer (29) or of said annular ring (30) relative to the cover (2).

10. Assembly (1) according to Claim 9, **characterized in that** each spacer (24) comprises a part (24a) for fixing to the cover (2), the axial and radial bearing zones (28a, 28b) being formed on a bearing plate (24b) distinct from the part (24a) for fixing to the cover (2), said bearing plate (24b) being interposed axially between the fixing part (24a) and the cover (4).

11. Assembly (1) according to Claim 10, **characterized in that** the bearing plate (24b) is mounted on said fixing part (24a) or secured to said fixing part (24a) .

12. Assembly (1) according to one of Claims 1 to 11, **characterized in that** the circumferential bearing of the assistance washer (29) on the diaphragm (9) is produced over a same diameter of application as the bearing of the assistance washer (29) on the spacer (24).

13. Method for mounting an assembly (1) according to one of Claims 4 to 12, **characterized in that** it comprises the steps of:
- measuring a dimension relating to the diaphragm (9),
- measuring a dimension relating to the assistance washer (29),
- choosing a ring (30) whose section makes it possible to compensate the differences between the measured dimensions of the diaphragm (9) and of the assistance washer (29) and reference dimensions,
- mounting the chosen ring (30) between the diaphragm (9) and the assistance washer (29).
